(19) **Europäisches Patentamt**

**European Patent Office**

**Office européen des brevets**

(11) **EP 1 237 116 B1**

(12) **EUROPEAN PATENT SPECIFICATION**

(45) Date of publication and mention
of the grant of the patent:
**29.11.2006 Bulletin 2006/48**

(51) Int Cl.:
***G06K 9/32*** *(2006.01)*

(21) Application number: **02004286.7**

(22) Date of filing: **27.02.2002**

(54) **Method and apparatus for detecting character frames using voting process**

Verfahren und Gerät zum Ermitteln von Zeichenrahmen mit Abstimmungsprozess

Procédé et appareil de détection des cadres de caractère utilisant un processus de vote

(84) Designated Contracting States:
**DE FR GB**

(30) Priority: **28.02.2001 JP 2001053433**
**28.01.2002 JP 2002019278**

(43) Date of publication of application:
**04.09.2002 Bulletin 2002/36**

(73) Proprietor: **NEC CORPORATION**
**Tokyo (JP)**

(72) Inventors:
• **Masato, Hayashi**
**Minato-ku,**
**Tokyo (JP)**
• **Tatsuo, Akiyama**
**Minato-ku,**
**Tokyo (JP)**
• **Takeshi, Bashomatsu**
**Minato-ku,**
**Tokyo (JP)**

(74) Representative: **Vossius & Partner**
**Siebertstrasse 4**
**81675 München (DE)**

(56) References cited:
**US-A- 5 459 797**     **US-A- 5 572 602**
**US-A- 5 815 595**     **US-A- 5 966 473**

• **PATENT ABSTRACTS OF JAPAN vol. 2000, no. 10, 17 November 2000 (2000-11-17) & JP 2000 207490 A (MATSUSHITA GRAPHIC COMMUNICATION SYSTEMS INC), 28 July 2000 (2000-07-28)**
• **PATENT ABSTRACTS OF JAPAN vol. 2000, no. 12, 3 January 2001 (2001-01-03) & JP 2000 268126 A (TOSHIBA CORP), 29 September 2000 (2000-09-29)**

**Description**

The present invention relates to a method and apparatus for detecting character frames such as frames of a zip code of a postal card.

Description of the Related Art

In a prior art character frame detecting apparatus, a labeling process using the shades of character frames is performed upon the character frames to detect lines thereof (see: JP-A-2000-268126). This will be explained later in detail.

In the above-mentioned prior art character frame detecting apparatus, however, unexpected arrangement of character frames cannot be detected. Also, if noise image or background image is added to the arrangement of character frames, such character frames may not be detected. Further, if one or two lines of the character frames are oblique, vague or missing, the shades of lines of the character frames are vague or missing, so that the character frames may not be detected, or the detection accuracy of the character frames deteriorates.

US-A-5 966 473 discloses a system for recognizing a quadrilateral object contained in an input bitmap image. A field position/size determination program scans the image and produces a histogram.

It is an object of the present invention to provide a method and apparatus for detecting character frames with a high detection accuracy. This object is achieved with the features of the claims.

The present invention will be more clearly understood from the description set forth below, as compared with the prior art, with reference to the accompanying drawings, wherein:

Fig. 1 is a block circuit diagram illustrating a prior art character frame detecting apparatus;
Fig. 2 is a diagram illustrating a postal card upon which a first operation of the character frame detecting apparatus of Fig. 1 is performed;
Figs. 3A through 3F are diagrams for explaining the first operation of the character frame detecting apparatus of Fig. 1 performed upon the postal card of Fig. 2;
Fig. 4 is a diagram illustrating a postal card upon which a second operation of the character frame detecting apparatus of Fig. 1 is performed;
Figs. 5A through 5F are diagrams for explaining the second operation of the character frame detecting apparatus of Fig. 1 performed upon the postal card of Fig. 4;
Fig. 6 is a diagram illustrating a postal card upon which the operation of the character frame detecting apparatus of Fig. 1 is not performed;
Fig. 7 is a diagram illustrating a postal card upon which the operation of the character frame detecting apparatus of Fig. 1 is erroneously performed;
Fig. 8 is a block circuit diagram illustrating an embodiment of the character frame detecting apparatus according to the present invention;
Fig. 9 is a flowchart for explaining an operation of the character frame detecting apparatus of Fig. 8 where the apparatus of Fig. 8 is constructed by a computer;
Figs. 10A, 10B, 10C, 10D, 10E and 10F are diagrams illustrating postal cards upon which the operation of the character frame detecting apparatus of Fig. 8 is performed;
Fig. 11 is a diagram for explaining a size of a postal card upon which the operation of the character frame detecting appartus of Fig. 8 is performed;
Figs. 12A, 12B, 12C and 12D are diagrams for explaining voting regions used in the flowchart of Fig. 9;
Fig. 13A is a diagram illustrating a character frame upon which the operation as illustrated in Fig. 9 is performed;
Fig. 13B is a diagram illustrating the character frame of Fig. 13A with gray gradients;
Fig. 13C is a diagram illustrating voting counts of the character frame of Fig. 13B;
Fig. 14 is a diagram illustrating another character frame arrangement upon which the operation of the flowchart as illustrated in Fig. 9 is performed.

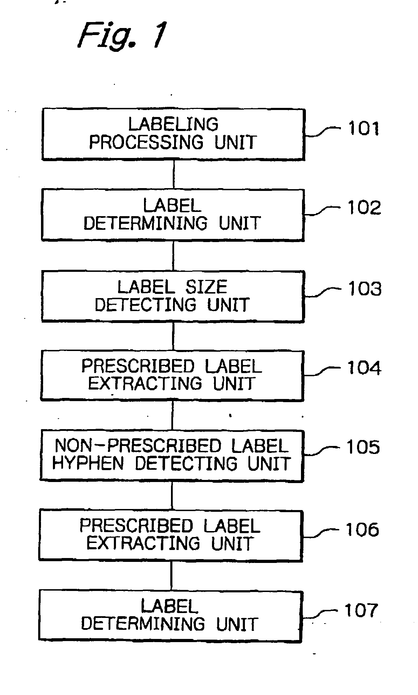

Before the description of the preferred embodiment, a prior art character frame detecting apparatus will be explained with reference to Figs. 1, 2, 3A, 3B, 3C, 3D, 3E, 3F, 4, 5A, 5B, 5C, 5D, 5E and 5F.

In Fig. 1, which illustrates a prior art character frame detecting apparatus (see: JP-A-2000-268126), reference numeral 101 designates a labeling processing unit for carrying out a labeling process to detect character frames which are so-called labels, 102 designates a label determining unit for determining whether each of the detected labels is prescribed or non-prescribed, 103 designates a label size detecting unit for detecting a size of the detected prescribed labels, 104 designates a prescribed label extracting unit for extracting prescribed labels from the detected non-prescribed label, 105 designates a non-prescribed label hyphen excluding unit for excluding a hyphen of the detected non-prescribed label, 106 designates a prescribed label extracting unit for extracting prescribed labels from the hyphen-excluded non-prescribed label, and 107 designates a label determining unit for determining whether or not the prescribed labels extracted by the prescribed label extracting unit 106 are the same as those determined by the label determining unit 102.

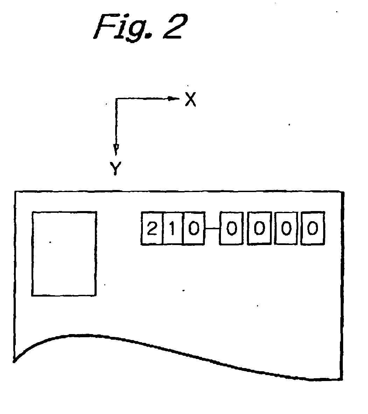

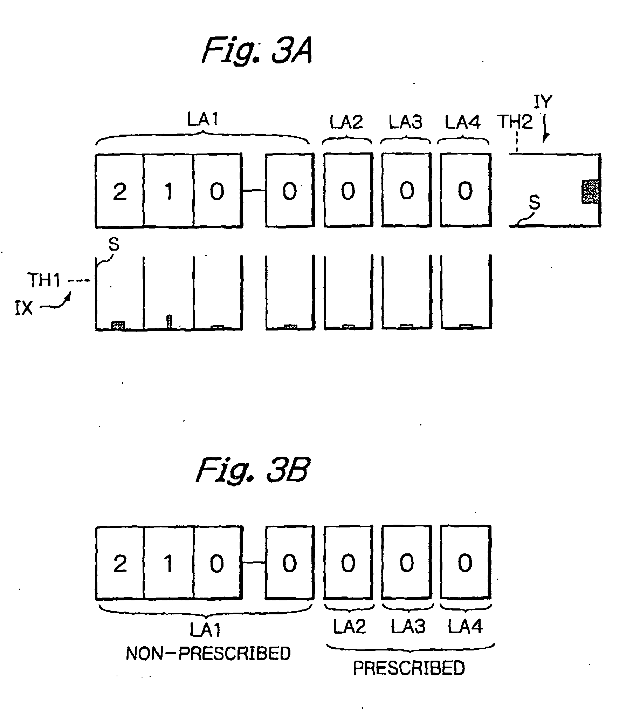

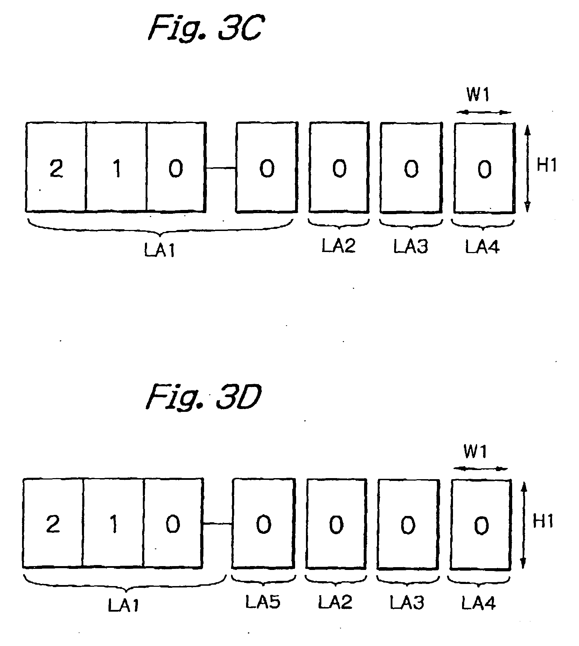

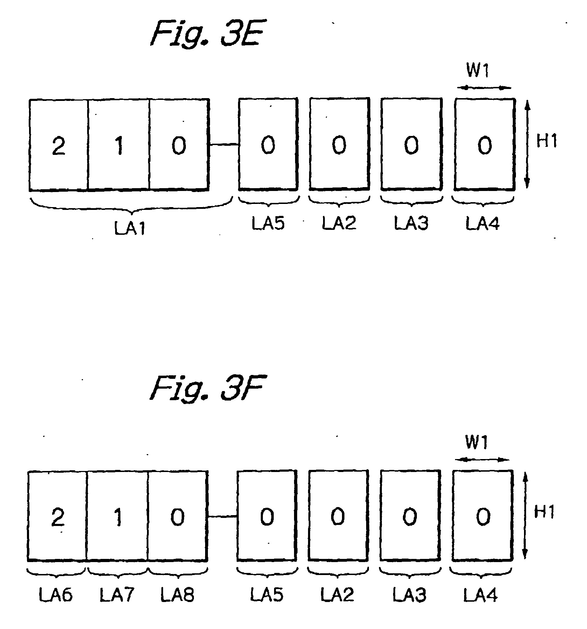

A first operation of the character frame detecting apparatus of Fig. 1 performed upon a postal card as illustrated in Fig. 2 is explained next with reference to Figs. 3A, 3B, 3C, 3D, 3E and 3F. Note that seven labels are printed on the postal card of Fig. 2.

First, referring to Fig. 3A, the label processing unit 101 detects character frames, i.e., labels by an X-directional image IX and a Y-directional image IY. As a result, four labels LA1, LA2, LA3 and LA4 are detected by using sharp shades S in the images IX and IY. That is, lines of the labels LA1, LA2, LA3 and LA4 are detected by whether or not the sharp shades S are higher than a threshold value TH1 or TH2.

Next, referring to Fig. 3B, the label determining unit 102 determines whether each of detected labels LA1, LA2, LA3 and LA4 is a prescribed label or a non-prescribed label. In this case, there are generally a plurality of prescribed labels. Therefore, the labels LA2, LA3 and LA4 have substantially the same size, so that the labels LA2, LA3 and LA4 are determined to be prescribed. On the other hand, the label LA1 is non-prescribed.

Next, referring to Fig. 3C, the label siz detecting unit 103 detects a size of the prescribed labels LA2, LA3 and LA4. In this case, a width W1 in the X-direction and a height H1 in the Y-direction are detected for the prescribed labels LA2, LA3 and LA4.

Next, referring to Fig. 3D, the prescribed label extracting unit 104 extracts a prescribed label LA5 from the non-prescribed label LA1 by using the size of W1 $\times$ L1.

Next, referring to Fig. 3E, the non-prescribed label hyphen excluding unit 105 excludes an edge, i.e., a hyphen from the non-prescribed label LA1.

Next, referring to Fig. 3F, the prescribed label extracting unit 106 extracts three prescribed labels LA6, LA7 and LA8 by dividing the hyphen-excluded non-prescribed label LA1 by 3.

Finally, the label determining unit 107 determines whether or not each of the labels LA6, LA7 and LA8 are prescribed, i.e., each of the labels LA6, LA7 and LA8 has a size of W1 $\times$ H1. Only when each of the labels LA6, LA7 and LA8 has a size of W1 $\times$ H1, is it determined that seven prescribed labels LA2 to LA8 are detected.

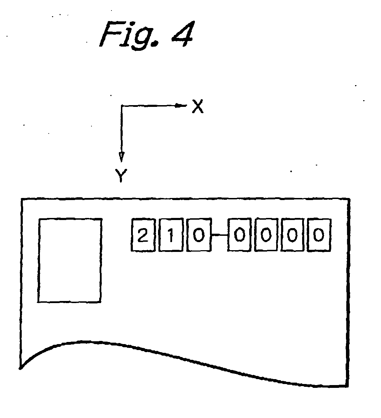

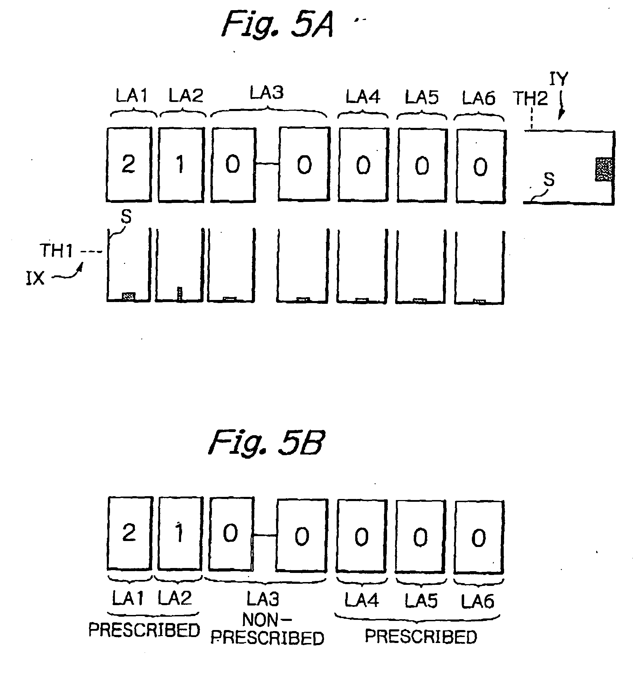

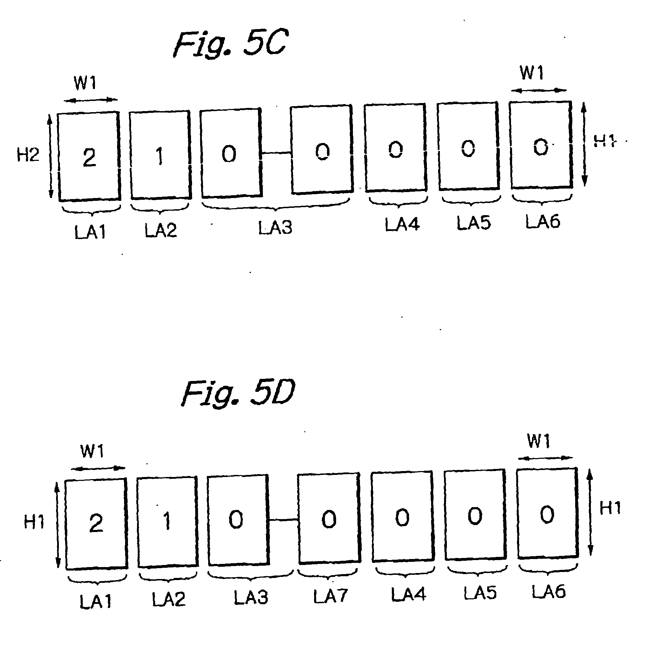

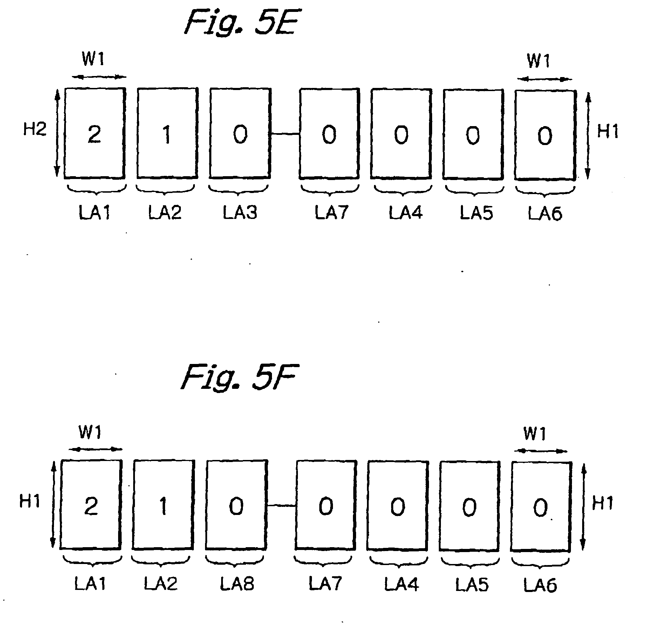

A second operation of the character frame detecting apparatus of Fig. 1 performed upon a postal card as illustrated in Fig. 4 is explained next with reference to Figs. 5A, 5B, 5C, 5D, 5E and 5F. Note that seven labels are also printed on the postal card of Fig. 4.

First, referring to Fig. 5A, the label processing unit 101 detects character frames, i.e., labels by an X-directional image IX and a Y-directional image IY. As a result, six labels LA1, LA2, LA3, LA4, LA5 and LA6 are detected by using sharp shades S in the images IX and IY. That is, lines of the labels LA1, LA2, LA3, LA4, LA5 and LA6 are detected by whether or not the sharp shades S are higher than a threshold value TH1 or TH2.

Next, referring to Fig. 5B, the label determining unit 102 determines whether each of detected labels LA1, LA2, LA3, LA4, LA5 and LA6 is a prescribed label or a non-prescribed label. In this case, there are generally a plurality of prescribed labels. Therefore, the labels LA1, LA2, LA4, LA5 and LA6 have substantially the same size, so that the labels LA1, LA2, LA4, LA5 and LA6 are determined to be prescribed. On the other hand, the label LA3 is non-prescribed.

Next, referring to Fig. 5C, the label size detecting unit 103 detects a size of the prescribed labels LA1, LS2, LA4, LA5 and LA6. In this case, a width W1 in the X-direction and a height H1 in the Y-direction are detected for the prescribed labels LA1, LA2, LA4, LA5 and LA6.

Next, referring to Fig. 5D, the prescribed label, extracting unit 104 extracts a prescribed label LA7 from the non-prescribed label LA3 by using the size of W1 $\times$ L1.

Next, referring to Fig. 5E, the non-prescribed label hyphen excluding unit 105 excludes an edge, i.e., a hyphen from the non-prescribed label LA3.

Next, referring to Fig. 5F, the prescribed label extracting unit 106 extracts a prescribed label LA8, i.e., the hyphen-excluded non-prescribed label LA3.

Finally, the label determining unit 107 determines whether or not each of the labels LA7 and LA8 are prescribed, i.e., each of the labels LA7 and LA8 has a size of W1 $\times$ H1. Only when each of the labels LA7 and LA8 has a size of W1 $\times$ H1, is it determined that seven prescribed labels LA1, LA2, LA4 through LA8 are detected.

Thus, in the character frame detecting appartus of Fig. 1, since lines of the labels (character frames) are detected by sharp shades S in the images IX any IY, even when characters are deviated from the labels or placed on the lines thereof, the labels can be surely detected. Also, since a proximity relationship between the labels is recognized by the size and location thereof, coordinates of labels in close proximity thereto can be surely detected.

In the character frame detecting apparatus of Fig. 1, however, the following problems exist:

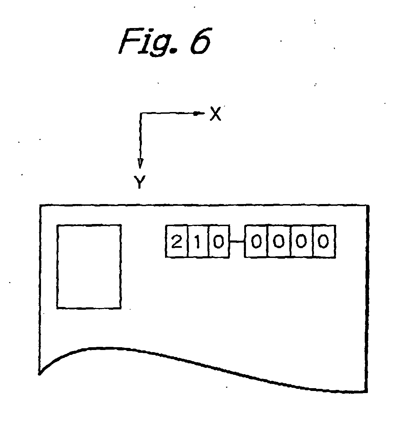

First, unexpected arrangement of labels cannot be detected. That is, only expected arrangements of labels as illustrated in Figs. 2 and 4 can be surely detected; however, other arrangements such as an arrangement as illustrated in Fig. 6 cannot be detected.

Second, if a noise image or background image is added to the arrangement of labels, such labels may not be detected.

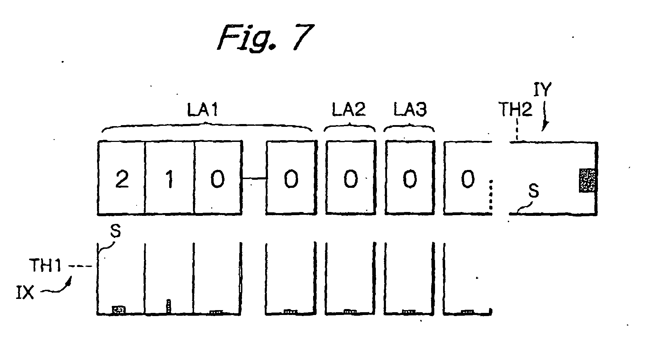

Third, if one or two lines of labels are oblique, vague or missing as illustrated in Fig. 7, the shades of lines of labels are vague or missing, so that the labels may not be detected or the detection accuracy of the labels deteriorates.

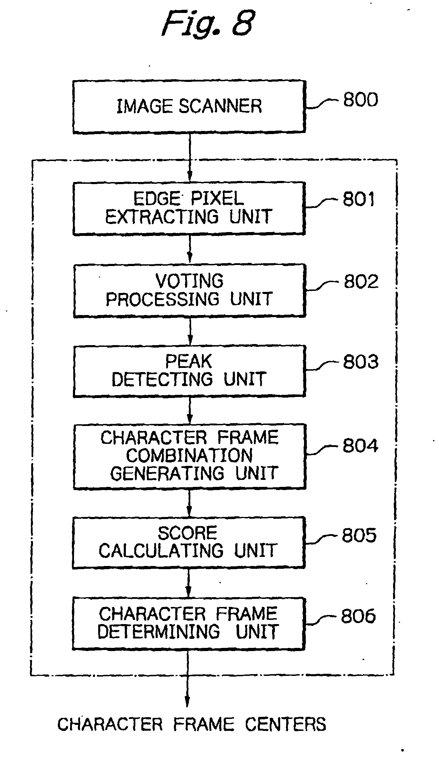

In Fig. 8, which illustrates an embodiment of the character frame detecting apparatus according to the present invention, reference numeral 800 designates an image scanner for reading gray pixel image of a postal card or the like. The gray pixel image of the image scanner 800 is supplied to an edge extracting unit 801.

The edge pixel extracting unit 801 extracts edge pixels at edges of lines of the gray pixel image by calculating a differential value of each pixel and determining whether or not the differential value is larger than a threshold value. The extracted edge pixel is supplied to a voting processing unit 802.

The voting processing unit 802 performs a voting process upon a voting region which is set in accordance with a gray gradient of the extracted edge pixel. The voting region is expected to include a center of an expected character frame. Note that a voting process increments a voting count by + 1 at each coordinate within the voting region. Generally, since there are a lot of edge pixels, there are a lot of voting regions. Therefore, the voting processing unit 802 carries out a lot of voting processes.

A peak detecting unit 803 detects peak points having peak voting counts from all the coordinates by determining whether or not the voting count of each coordinate is larger than a threshold value. The peak points are registered as character frame center candidates.

A character frame combination generating unit 804 generates combinations of a predetermined number of the character frame center candidates detected by the peak detecting unit 803. For example, if there are seven character frames in a postal card, each character frame combination includes seven character frame center candidates. In this case, if there are eight character frame center candidates, eight character frame combinations are generated ($8 = {}_8C_7$). Of course, if the number of character frame center candidates is less than 7, the character frame combination generating unit 804 is not operated.

A score calculating unit 805 calculates a score for each of the character frame combinations. The score is dependent upon the voting counts, equi-interval degree and horizontality degree of coordinates of the character frame center candidates of each of the character frame combinations.

A character frame determining unit 806 selects one of the character frame combinations having the largest score, and determines whether or not the score of a selected character frame combination is larger that a threshold value. Only when this score is larger than the threshold value, are the character frame center candidates of such a selected character frame combination determined to be character frame centers.

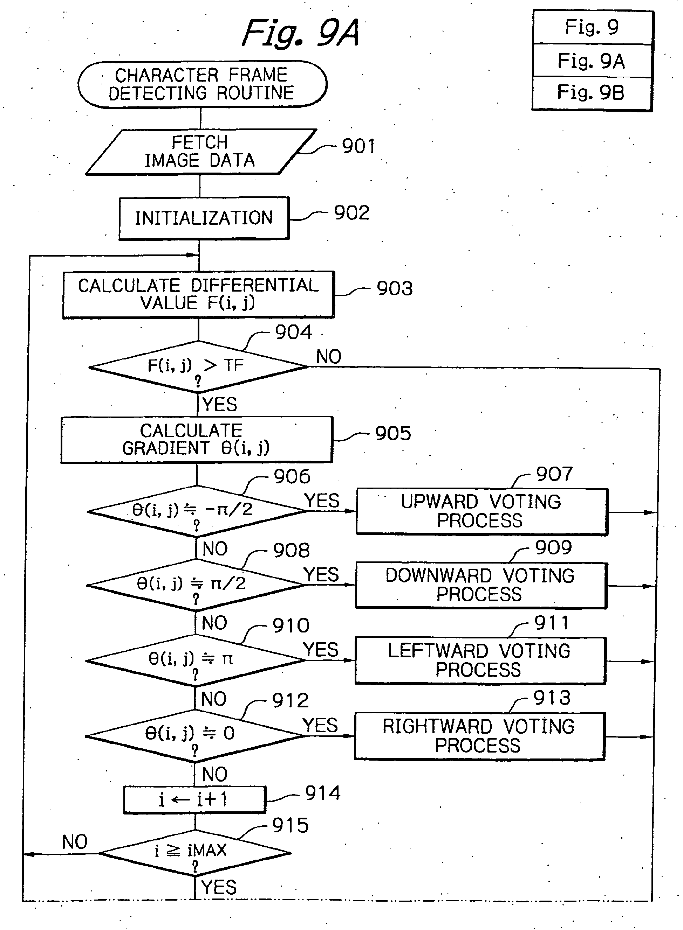

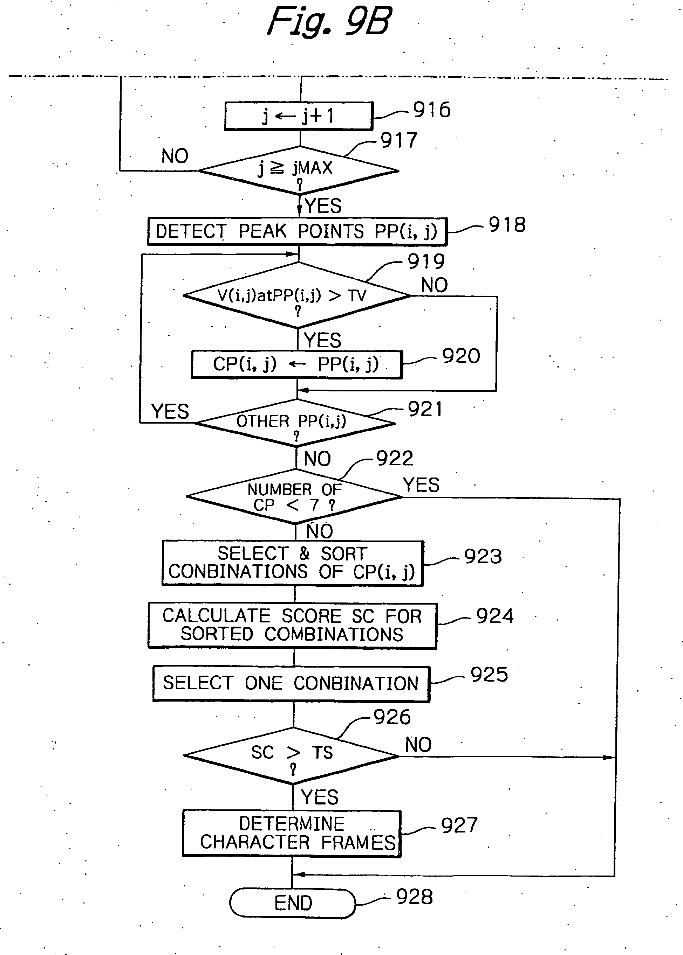

The character frame detecting apparatus of Fig. 8 is constructed by a computer including a central processing unit (CPU), a read-only memory (ROM) for storing programs and fixed data, a random access memory (RAM) for storing temporary data and the like. In this case, the CPU carries out an operation in accordance with a flowchart as illustrated in Fig. 9.

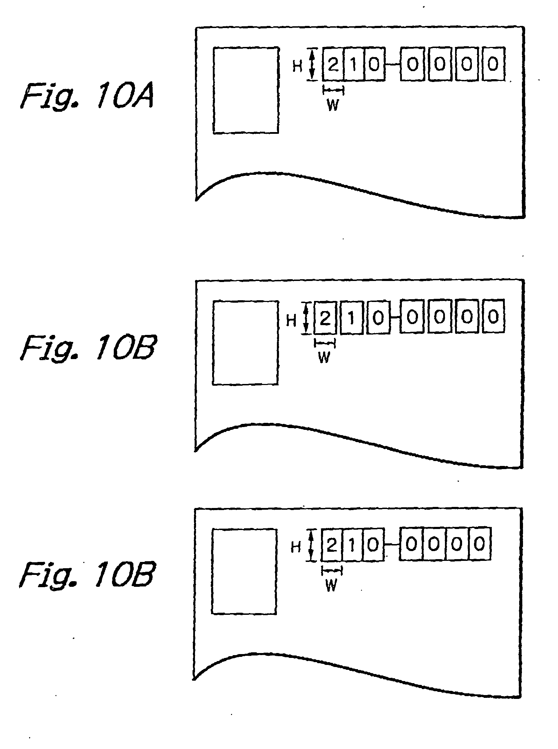

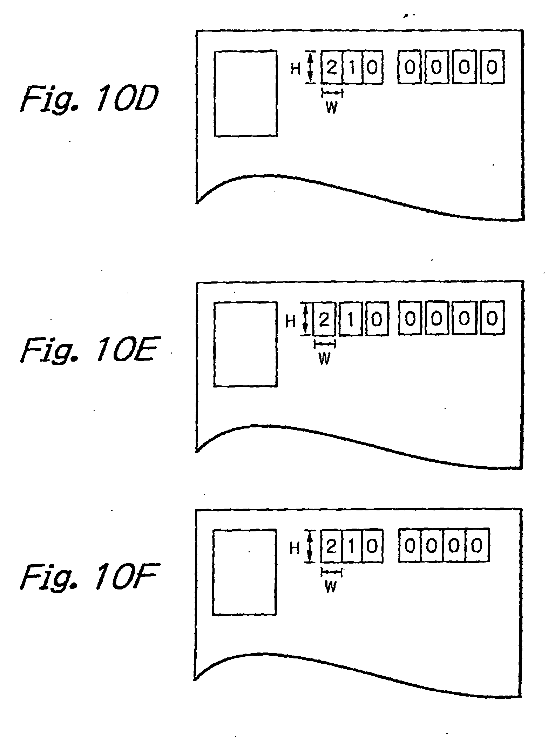

First, at step 901. the CPU fetches image data from the image scanner 800. For example, assume that the fetched image data is a postal card having a zip code of seven digits as illustrated in Fig. 10A, 10B, 10C, 10D, 10E or 10F where character frames (labels) have a size of W $\times$ H.

Next, at step 902, an initialization is carried out, i.e.,

$$V(i, j) \leftarrow 0$$
$$i \leftarrow 0$$
$$j \leftarrow 0$$

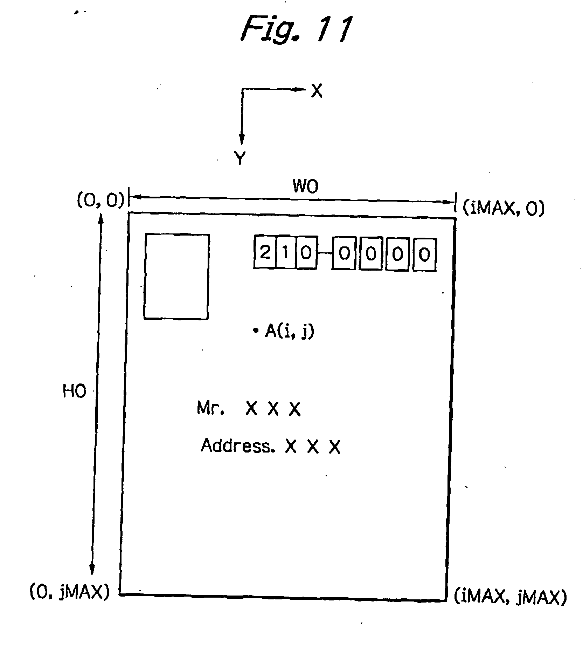

Note that a coordinate (i, j) is defined as shown in Fig. 11, so that i is 0 to iMAX and j is 0 to jMAX. Also, V(i, j) is a voting count at a coordinate (i, j)

Next, at step 903, a differential value F(i, j) is calculated by

$$F(i, j)$$
$$\leftarrow \{A(i, j) - A(i + 1, j)\}^2$$
$$+ \{A(i, j) - A(i, j + 1)\}^2$$

where A(i, j) is a gray value of the image data at a pixel (i, j). Note that the differential value F(i, j) can be a square root value thereof.

Next, at step 904, it is determined whether or not the differential value F(i, j) is larger that a threshold value TF. Only when F(i, j) > TF, does the control proceed to step 905. Otherwise, the control proceeds to step 914.

At step 905, a gradient θ(i, j)of the coordinate (i, j)is calculated by

$$\theta(i, j) \leftarrow \text{arc tan} \ [\{A(i, j) - A(i, j + 1)\} \ / \ \{A(i, j) - A(i + 1, j)\}]$$

Next, at step 906, it is determined whether the gradient θ(i, j) is upward, i.e.,

$$-\pi/2 - \alpha \leq \theta(i, j) \leq -\pi/2 + \alpha$$

where α is a small definite value. Only when the gradient θ(i, j) is upward, does the control proceed to step 907 which carries out an upward voting process. That is, as illustrated in Fig. 12A, a rectangular voting region 1201 having a start coordinate (i-W/2, j-(H+d)/2) and an end coordinate (i+W/2, j-(H-d)/2) where d is a small definite value is set, and V(i', j') whose coordinate (i', j') belongs to the rectangular voting region 1201 is incremented by +1, i.e.,

$$V(i', j') \leftarrow V(i', j') + 1$$

where i' is (i-W/2) to (i+W/2), and j' is (j-(H + d)/2) to (j-(H-d)/2).

Otherwise, i.e., when the gradient θ (i, j) is not upward, the control proceeds from step 906 to step 908.

At step 908, it is determined whether the gradient θ(i, j) is downward, i.e.,

$$\pi/2 - \alpha \leq \theta(i, j) \leq \pi/2 + \alpha$$

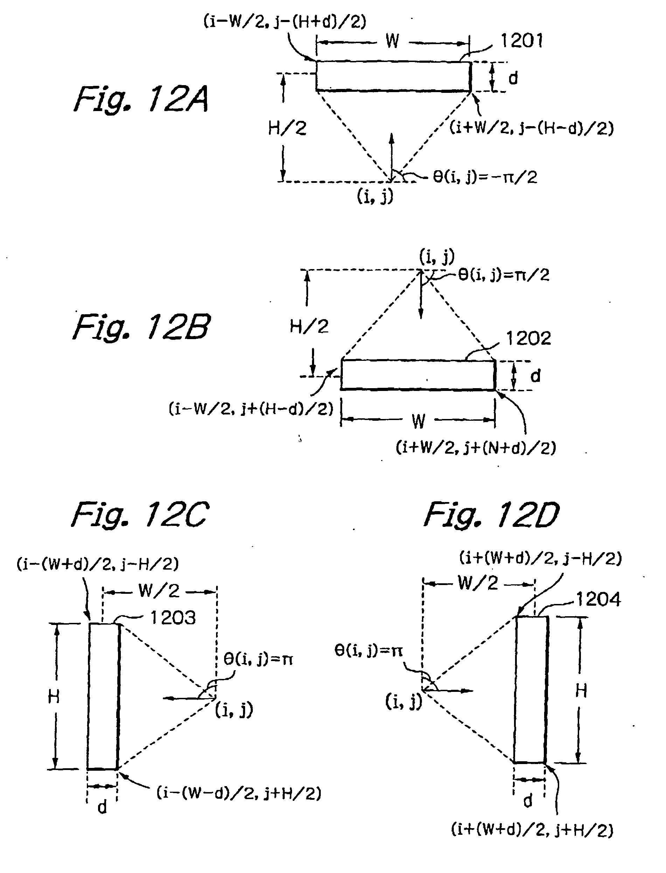

Only when the gradient θ(i, j) is downward, does the control proceed to step 909 which carries out a downward voting process. That is, as illustrated in Fig. 12B, a rectangular voting region 1202 having a start coordinate (i-W/2, j+(H-d)/2) and an end coordinate (i+W/2, j+(H+d)/2) is set, and V(i', j') whose coordinate (i', j') belongs to the rectangular voting region 1202 is incremented by +1, i.e.,

$$V(i', j') \leftarrow V(\overline{i'}, \overline{j'}) + 1$$

where i' is (i-W/2) to (i+W/2), and j' is (j+(H - d)/2) to (j+(H+d)/2).

Otherwise, i.e., when the gradient θ(i, j) is not downward, the control proceeds from step 908 to step 910.

At step 910, it is determined whether the gradient θ(i, j) is leftward, i.e.,

$$\pi - \alpha \leq \theta(i, j) \leq \pi + \alpha$$

Only when the gradient θ(i, j) is leftward, does the control proceed to step 911 which carries out a leftward voting process. That is, as illustrated in Fig. 12C, a rectangular voting region 1203 having a start coordinate (i-(W+d)/2, j-H/2) and an end coordinate (i-(W-d)/2, j+H/2) is set, and V(i', j') whose coordinate (i', j') belongs to the rectangular voting region 1203 is incremented by +1, i.e.,

$$V(i', j') \leftarrow V(i', j') + 1$$

where i' is (i-(W+d)/2) to (i-(W-d)/2), and j' is (j-H/2) to (j+H/2).

Otherwise, i.e., when the gradient θ(i, j) is not leftward, the control proceeds from step 910 to step 912.

At step 912, it is determined whether the gradient θ(i, j) is rightward, i.e.,

$$-\alpha \leqq \theta(i, j) \leqq +\alpha$$

Only when the gradient θ(i, j) is rightward, does the control proceed to step 913 which carries out a rightward voting process. That is, as illustrated in Fig. 12D, a rectangular voting region 1204 having a start coordinate (i+(W+d)/2, j-H/2) and an end coordinate (i+(W+d)/2, j+H/2) is set, and V(i', j') whose coordinate (i', j') belongs to the rectangular voting region 1204 is incremented by +1, i.e.,

$$V(i', j') \leftarrow V(i', j') + 1$$

where i' is (i+(W+d)/2) to (i+(W-d)/2), and j' is (j-H/2) to (j+H/2).

Otherwise, i.e., when when the gradient θ(i,j) is not rightward, the control 1 proceeds from step 912 to step 914.

Steps 914 through 917 repeat the operation at steps 903 through 913 for all the coordinates (i, j) within the postal card having a size of W0 × H0 as illustrated in Fig. 11.

Thus, only when the gradient θ (i, j) is substantially π/2, -π/2, π or 0, in other words, 90° ,-90°, 180° or 0° (mod. 360°) with respect to the X-direction, is a voting process carried out.

Next, at step 918, peak points of the voting counts V(i, j) are detected. That is, it is determined whether or not all the following conditions are satisfied for a coordinate (i, j):

$$V(i, j) > V(i-1, j)$$

$$V(i, j) > V(i, j-1)$$

$$V(i, j) > V(i+1, j)$$

$$V(i, j) > V(i, j+1)$$

Only when all the above-mentioned four conditions are satisfied, is this coordinate (i, j) detected as a peak point PP(i, j). Note that a plurality of peak points are generally detected.

Next, at step 919 it is determined whether or not V(i, j) at PP(i, j) is larger than a threshold value TV. Only when V(i, j) at PP(i, j) > TV, does the control proceed to step 920 which registers the peak point PP(i, j) as a character frame (label) center candidate CP(i, j). Otherwise, the control proceeds directly to step 921.

Step 921 repeats the operation at steps 919 and 920 for all the peak points PP(i, j).

Next, at step 922, it is determined whether or not the number of registered character frame center candidates CP(i, j) is smaller than 7, since the number of character frames (labels) was assumed to be 7 as illustrated in Figs. 12A, 12B, 12C, 12D, 12E and 12F. When the number of registered character frame center candidates CP(i, j) is not smaller than 7, the control proceeds to step 923. Otherwise, the control proceeds directly to step 928.

At step 923, the CPU selects a combination of seven ones from the registered character frame (label) center candidates CP(i, j). For example, if the number of the registered character frame (label) center candidates CP(i, j) is 7, the number of combinations of seven character frame (label) center candidates is 1(= $_7C_7$). Also, if the number of the registered character frame (label) center candidates CP(i, j) is 8, the number of combinations of seven character frame (label) center candidates is 8(= $_8C_7$). Further, if the number of the registered character frame (label) center candidates CP(i, j) is 9, the number of combinations of seven character frame (label) center candidates is 36(= $_9C_7$). Then, each of the selected combinations of character frame (label) center candidates CP(i, j) are sorted in accordance with the X-direction.

Next, at step 924, a score SC is calculated for each sorted combination of the character frame (label) center candidates CP(i, j) by

$$SC$$

$$\leftarrow W1 \times SUM + W2 \times INT + W3 \times HOR$$

where SUM is a sum of the voting counts at the character frame (label) center candidates CP(i, j) within one sorted combination;

INT is an equi-interval degree of the character frame (label) center candidates CP(i, j) within the one sorted combination;

HOR is a horizontality degree of the character frame (label) center candidates CP(i, j) within the one sorted combination; and

W1, W2 and W3 are weighted factors where W1 is positive and W2 and W3 are negative.

If one sorted combination is given by coordinates (i1, j1), (i2, j2), (i3, j3), (i4, j4), (i5, j5), (i6, j6) and (i7, j7), the sum SUM is calculated by

$$SUM \leftarrow V(i1, j1) + V(i2, j2) + V(i3, j3) + V(i4, j4)$$
$$+ V(i5, j5) + V(i6, j6) + V(i7, j7)$$

That is, the larger the sum SUM, the larger the possibility of character frames (labels) for a postal card.

Also, the equi-interval degree INT is calculated by

$$INT \leftarrow \{AVE1-(i2-i1)\}^2 + \{AVE1-(i3-i2)\}^2 + \{AVE2-(i5-i4)\}^2 + \{AVE2-(i6-i5)\}^2 + \{AVE2-(i7-i6)\}^2$$

where

$$AVE1 = (i3-i1) / 2$$

$$AVE2 = (i7-i4) / 3$$

Note that AVE1 designates an average interval of the three most significant digits (labels), and AVE2 designates an average interval of the four least significant digits (labels). That is, the smaller the equi-interval degree INT, the larger the possibility of character frames (labels) for a postal card.

Further, the horizontality degree HOR is calculated by

$$HOR \leftarrow (j2-j1)^2 + (j3-j2)^2 + (j4-j3)^2 + (j5-j4)^2 + (j6-j5)\}^2 + (j7-j6)\}^2$$

That is, the smaller the horizontality, the larger the possibility of character frames (labels) for a postal card.

Next, at step 925, the CPU selects one sorted combination having a largest score from the sorted combinations.

Next, at step 926, it is determined whether or not the score SC of the selected combination at step 925 are larger than a threshold value TS. Only when SC > TS, does the control proceed to step 927 which determines that the selected combination of character frames at step 925 is character frames (labels) in the postal card. Otherwise, it is determined that there is no character frames (labels) in the postal card, and thus, the control proceeds directly to step 928.

Thus, the routine of Fig. 9 is completed by step 928.

At step 904 of Fig. 9, it is determined whether or not the differential value F(i, j) is larger than the threshold value TF. As a result, if a noise image or background image is included in the fetched image data, the detection of noise image or background image can be suppressed. Additionally, F(i, j) $\leq$ TF, the operation at steps 905 through 913 are skipped to increase the operation speed.

Also, at steps 906 through 913 of Fig. 9, a voting process is performed upon only four gray gradients, i.e., $-\pi/2$, $\pi/2$, $\pi$ and 0. That is, a voting process is performed upon only straight lines along the X-direction and the Y-direction. As a result, no voting process is performed upon oblique lines with respect to the X- and Y-directions, characters including curved lines and the like. Therefore, character frames including only such straight lines can be surely detected.

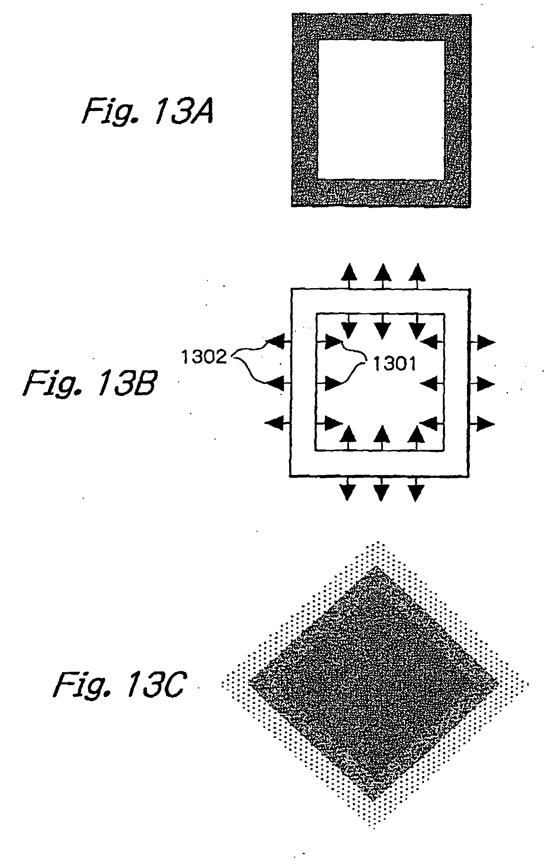

If the voting process as illustrated at steps 905 to 917 in Fig. 9 is applied to a character frame as illustrated in Fig. 13A, the gray gradient $\theta$ of edge pixels are inward at the inner edges of lines of the character frame as indicated by 1301, while the gray gradient $\theta$ of edge pixels are outward at the outer edges of lines of the character frame as indicated by 1302 in Fig. 13B. As a result, as illustrated in Fig. 13C, since the voting counts by the outward gray gradient $\theta$ at the outer edges are dispersed, the voting counts are concentrated on the center of the character frame by the inward gradient $\theta$ at the inner edges. Also, since the concentration of voting counts on the center of the character frame is not affected by hyphens and intervals between character frames, the center of the character frame can be surely detected, so that various arrangements as illustrated in Figs. 10A, 10B, 10C, 10D, 10E and 10F can be surely detected. Additionally, if one or two lines of one character frame are oblique, vague or missing, the concentration of voting counts on the center of the character frame is hardly affected, the center thereof can also be surely detected.

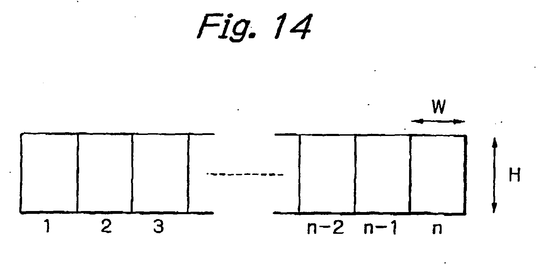

The above-described embodiment relates to a seven-digit character frame arrangement as illustrated in Figs. 10A, 10B, 10C, 10D, 10E and 10F; however, the present invention can be applied to an n-digit character frame arrangement as illustrated in Fig. 14. In this case, at step 922, it is determined whether or not the number of registered character frame center candidates CP(i, j) is smaller than n. Since the number of character frames (labels) was assumed to be 7 as illustrated in Figs. 12A, 12B, 12C, 12D, 12E and 12F, when the number of registered character frame center candidates CP(i, j) is not smaller than 7, the control proceeds to step 923.

Also, at step 924, if one sorted combination is given by coordinates (i1, j1), (i2, j2), (i3, j3), $\cdots$, (i(n-1), j(n-1) and (in, jn), the sum SUM is calculated by

$$SUM \leftarrow V(i1, j1) + V(i2, j2) + V(i3, j3) + \cdots + V(i(n-1), j(n-1)) + V(in, jn)$$

Also, the equi-interval degree INT is calculated by

$$INT \leftarrow \{AVE-(i2-i1)\}^2 + \{AVE-(i3-i2)\}^2 \cdots + \cdots \{AVE-(i(n-1)-i(n-2))\}^2 + \{AVE-(in-i(n-1))\}^2$$

where

$$AVE = (in-i1) / (n-1)$$

Further, the horizontality degree HOR is calculated by

$$HOR \leftarrow (j2-j1)^2 + (j3-j2)^2 + (j4-j3)^2 + \cdots + (j(n-1)-j(n-2))^2 + (jn-j(n-1))^2$$

As explained hereinabove, according to the present invention, various kinds of character frame arrangements can be surely detected in spite of hyphens and intervals of character frames. Also, even if a noise image or background image is added, character frames can be surely detected. Further, even if some of lines of character frames are oblique, vague or missing, the deterioration of detection of character frames can be suppressed.

**Claims**

1. A character frame detecting method comprising the steps of:

extracting edge pixels at edges of lines of character frames from gray pixels of a gray pixel image;
calculating gray gradients ($\theta(i, j)$) at said edge pixels;
setting voting regions (1201, 1202, 1203, 1204) with respect to said edge pixels in accordance with said gray gradients thereof;
determining whether each of said gray gradients is substantially one of 90° , -90° ,180° and 0° with respect to one axis of said gray pixel image,
so that when one of said gray gradients is substantially one of 90° , -90° ,180° and 0° with respect to the axis of said gray pixel image, said voting region setting step sets one of said voting regions in accordance with said one of said gray gradients;
wherein, when a first one of said gray gradients is substantially one of 90° and -90° with respect to the axis of said gray pixel image, a first corresponding one of said voting regions has a width (W) the same as the width (W) of an expected character frame size and is distant from a corresponding one of said edge pixels by a height (H/2) half the height (H) of said expected character frame size along the first one of said gray gradients; and
wherein, when a second one of said gray gradients is substantially one of 180° and 0° with respect to the axis of said gray pixel image, a second corresponding one of said voting regions has a height (H) the same as the height (H) of said expected character frame size and is distant from a corresponding one of said edge pixels by a width (W/2) half the width (W) of said expected character frame size along the second one of said gray gradients;
carrying out voting processes by incrementing voting counts at coordinates within said voting regions; and
detecting peak coordinates (PP(i, j)) having peak voting counts from said coordinates, so that said peak coordinates are determined to be centers of said character frames.

2. The method as set forth in claim 1, wherein said edge pixel extracting step comprises the steps of:

calculating differential values at said gray pixels; and
determining whether or not each of said differential values is larger than a differential value threshold value(TF), so that, when each of said differential values is larger than said differential value threshold value, a corresponding one of said gray pixels is determined to be one of said edge pixels.

3. The method as set forth in claim 2, wherein said differential value calculating step calculates said differential values F(i, j) at coordinates (i, j) by

$$F(i, j) \leftarrow \{A(i, j) - A(i + 1, j)\}^2 + \{A(i, j) - A(i, j + 1)\}^2$$

where A(i, j) is a gray value of a gray pixel at (i, j) and A(i + 1, j) and A(i, j + 1) are gray values of gray pixels at adjacent coordinates to (i, j)

4. The method as set forth in claim 2, wherein said differential value calculating step calculates said differential values F(i, j) at coordinates (i, j) by

$$F(i, j) \leftarrow [\{A(i, j) - A(i + 1, j)\}^2 + \{A(i, j) - A(i, j + 1)\}^2]^{1/2}$$

where A(i, j) is a gray value of a gray pixel at (i, j) and A(1+ 1, j) and A(i, j + 1) are gray values of gray pixels at adjacent coordinates to (i, j).

5. The method as set forth in any one of claim 1 to 4, wherein each of said voting regions is rectangular.

6. The method as set forth in claim 5, wherein each of said voting regions is distant from a corresponding one of said edge pixels by a predetermined distance (H/2, W/2) and perpendicular to the gray gradient thereof.

7. The method as set forth in claim 5 or 6, wherein each of said voting regions has a length of one of the width (W) and height (H) of an expected character frame size.

8. The method as set forth in any one of claims 1 to 7, wherein in said peak detecting step comprises the steps of:

   determining whether or not the voting count of each of said peak coordinates is larger than a peak threshold value (TV); and
   registering said each of said peak coordinates as a character frame center candidate (CP(i, j)) when the voting count of said each of said peak coordinates is larger than said peak threshold value, so that said character frame center candidate is determined to be one center of said character frames.

9. The method as set forth in claim 8, further comprising the steps of :

   generating combinations of a predetermined number of registered character frame center candidates;
   calculating a score (SC) of each of said combinations by a sum of the voting counts of said registered character frame center candidates belonging thereto; and
   determining that the registered character frame center candidates of one of said combinations are said centers of said character frames.

10. The method as set forth in claim 9, wherein said score calculating step calculates the score of each of said combinations by subtracting an equi-interval degree of said registered character frame center candidates within said each of said combinations from the sum of the voting counts thereof.

11. The method as set forth in claim 8 or 9, wherein said score calculating step calculates the score of each of said combinations by subtracting a horizontality degree of said registered character frame center candidates within said each of said combinations from the sum of the voting counts thereof.

12. The method as set forth in claim 9, wherein said score calculating step calculates the score of each of said combinations by subtracting an equi-interval degree and a horizontality degree of said registered character frame center candidates within said each of said combinations from the sum of the voting counts thereof

13. The method as set forth in claim 9, 10, 11 or 12, wherein said character frame center determining step comprises the steps of:

   selecting one of said combinations having a largest score from said combinations; and
   determining whether or not the score of said selected combination is larger than a combination threshold value (TS), so that the registered character frame center candidates of said selected combination of said character frame center candidates are determined to be said centers of said character frames.

14. The method as set forth in any one of claims 1 to 13, wherein said gray pixel image is a postal card image.

15. A character frame detecting apparatus comprising:

   an edge pixel extracting unit (801) for extracting edge pixels at edges of lines of character frames from gray pixels of a gray pixel image;
   a voting processing unit (802) for calculating gray gradients (θ(i, j)) at said edge pixels, setting voting regions (1201, 1202, 1203, 1204) with respect to said edge pixels in accordance with said gray gradients thereof, and carrying out voting processes by incrementing voting counts at coordinates within said voting regions;
   wherein said voting processing unit comprises means for determining whether each of said gray gradients is substantially one of 90°, -90°, 180° and 0° with respect to one axis of said gray pixel image, so that when one of said gray gradients is substantially one of 90°, -90°, 180° and 0° with respect to the axis of said gray pixel image, said voting region setting step sets one of said voting regions in accordance with said one of said gray gradients;
   wherein, when a first one of said gray gradients is substantially one of 90° and -90° with respect to the axis of said gray pixel image, a first corresponding one of said voting regions has a width (W) the same as the width (W) of an expected character frame size and is distant from a corresponding one of said edge pixels by a height (H/2) half the height (H) of said expected character frame size along the first one of said gray gradients; and wherein, when a second one of said gray gradients is substantially one of 180° and 0° with respect to the axis of said gray pixel image, a second corresponding one of said voting regions has a height (H) the same as the height (H) of said expected character frame size and is distant from a corresponding one of said edge pixels by a width (W/2) half the width (W) of said expected character frame size along the second one of said gray gradients;

a peak detecting unit (803) for detecting peak coordinates (PP(i, j)) having peak voting counts from said coordinates, so that said peak coordinates are determined to be centers of said character frames.

16. The apparatus as set forth in claim 15, wherein said edge pixel extracting unit comprises:

means for calculating differential values at said gray pixels; and

means for determining whether or not each or said differential values is larger than a differential value threshold value(TF), so that, when each of said differential values is larger than said differential value threshold value, a corresponding one of said gray pixels is determined to be one of said wedge pixel.

17. The apparatus as set forth in claim 16, wherein said differential value calculating means calculates said differential values F(i, j) at coordinates (i, j) by

$$F(i, j) \leftarrow \{A(i, j) - A(i + 1, j)\}^2 + \{A(i, j) - A(i, j + 1)\}^2$$

where A(i, j) is a gray value of a gray pixel at (i, j) and A(i + 1, j) and A(i, j + 1) are gray values of gray pixels at adjacent coordinates to (i, j).

18. The apparatus as set forth in claim 20, wherein said differential value calculating means calculates said differential values F(i, j) at coordinates (i, j) by

$$F(i, j) \leftarrow [\{A(i, j) - A(i + 1, j)\}^2 + \{A(i, j) - A(i, j + 1)\}^2]^{1/2}$$

where A(i, j) is a gray value of a gray pixels at (i, j) and A(i + 1, j) and A(i, j + 1) are gray values of gray pixels at adjacent coordinates to (i, j).

19. The apparatus as set forth in any one of claims 15 to 18, wherein each of said voting regions is rectangular.

20. The apparatus as set forth in claim 19, wherein each of said voting regions is distant from a corresponding one of said edge pixels by a predetermined distance (H/2, W/2) and perpendicular to the gray gradient thereof.

21. The apparatus as set forth in claim 19 or 20, wherein each of said voting regions has a length of one of the width (W) and height (H) of an expected character frame size.

22. The apparatus as set forth in any one of claims 15 to 21, wherein said peak detecting unit comprises:

means for determining whether or not the voting count of each of said peak coordinates is larger than a peak threshold value (TV); and

means for registering said each of said peak coordinates as a character frame center candidate (CP(1, j)) when the voting count of said each of said peak coordinates is larger than said peak threshold value, so that said character frame center candidate is determined to be one center of said character frames.

23. The apparatus as set forth in claim 22, further comprising:

a character frame combination generating unit (804) for generating combinations of a predetermined number of registered character frame center candidates;

a score calculating unit (805) for calculating a score (SC) of each of said combinations by a sum of the voting counts of said registered character frame center candidates belonging thereto; and

a character frame determining unit (806) for determining that the registered character frame center candidates of one of said combinations are said centers of said character frames.

24. The apparatus as set forth in claim 23, wherein said score calculating unit calculates the score of each of said combinations by subtracting an equi-interval degree of said registered character frame center candidates within said each of said combinations from the sum of the voting counts thereof.

25. The apparatus as set forth in claim 23, wherein said score calculating unit calculates the score of each of said combinations by subtracting a horizontality degree of said registered character frame center candidates within said each of said combinations from the sum of the voting counts thereof.

26. The apparatus as set forth in claim 23, wherein said score calculating unit calculates the score of each of said combinations by subtracting an equi-interval degree and a horizontality degree of said registered character frame center candidates within said each of said combinations from the sum of the voting counts thereof.

27. The apparatus as set forth in any one of claims 23 to 26, wherein said character frame center determining unit comprises:

means for selecting one of said combinations having a largest score from said combinations; and

means for determining whether or not the score of said selected combination is larger than a combination threshold value (TS), so that said selected combination of said character frame center candidates are determined to be said centers of said character frames.

28. The apparatus as set forth in any one of claims 15 to 27, wherein said gray pixel image is a postal card image.

**Patentansprüche**

1. Zeichenrahmenerkennungsverfahren, das die folgenden Schritte aufweist:

Extraktion von Randpixeln an Linienrändern von Zeichenrahmen aus Graupixeln eines Graupixelbilds;

Berechnen von Graugradienten ($\theta(i, j)$) an den Randpixeln;

Einstellen von Abstimmungsbereichen (1201, 1202, 1203, 1204) bezüglich der Randpixel entsprechend deren Graugradienten;

Feststellen, ob jeder der Graugradienten im wesentlichen in einem Winkel von 90°, -90°, 180° bzw. 0° zu einer Achse des Graupixelbilds ausgerichtet ist,

so daß, wenn einer der Graugradienten im wesentlichen in einem Winkel von 90°, -90°, 180° bzw. 0° zu der Achse des Graupixelbilds ausgerichtet ist, der Abstimmungsbereichseinstellschritt einen der Abstimmungsbereiche entsprechend einem der Graugradienten einstellt;

wobei, wenn ein erster von den Graugradienten im wesentlichen in einem Winkel von 90° und -90° bezüglich der Achse des Graupixelbilds ausgerichtet ist, ein entsprechender erster Bereich von den Abstimmungsbereichen die gleiche Breite (W) wie die Breite (W) einer erwarteten Zeichenrahmengröße aufweist und von einem entsprechenden Randpixel um eine Höhe (H/2) entfernt ist, die gleich der halben Höhe (H) der erwarteten Zeichenrahmengröße in Richtung des ersten Graugradienten ist; und

wobei, wenn ein zweiter von den Graugradienten im wesentlichen in einem Winkel von 180° und 0° bezüglich der Achse des Graupixelbilds ausgerichtet ist, ein entsprechender zweiter Abstimmungsbereich die gleiche Höhe (H) wie die Höhe (H) der erwarteten Zeichenrahmengröße aufweist und von einem entsprechenden Randpixel um eine Breite (W/2) entfernt ist, die gleich der halben Breite (W) der erwarteten Zeichenrahmengröße in Richtung des zweiten Graugradienten ist;

Ausführen von Abstimmungsprozessen durch Inkrementieren von Abstimmungszählwerten bei Koordinaten innerhalb der Abstimmungsbereiche; und

Erfassen von Spitzenkoordinaten ($PP(i, j)$) mit maximalen Abstimmungszählwerten aus den Koordinaten, so daß die Spitzenkoordinaten als Mittelpunkte der Zeichenrahmen bestimmt werden.

**2.** Verfahren nach Anspruch 1, wobei der Randpixelextraktionsschritt die folgenden Schritte aufweist:

Berechnen von Differenzwerten der Graupixel; und
Feststellen ob jeder der Differenzwerte größer als ein Differenzschwellwert (TF) ist oder nicht, so daß, wenn jeder von den Differenzwerten größer als der Differenzschwellwert ist, ein entsprechendes Graupixel als eines von den Randpixeln bestimmt wird.

**3.** Verfahren nach Anspruch 2, wobei der Differenzwertberechnungsschritt die Differenzwerte F(i, j) in Koordinaten (i, j) wie folgt berechnet:

$$F(i, j) \leftarrow \{A(i, j) - A(i+1, j)\}^2 + \{A(i, j) - A(i, j+1)\}^2$$

wobei A(i, j) ein Grauwert eines Graupixels bei (i, j) ist und A(i+1, j) und A(i, j+1) Grauwerte von Graupixeln in benachbarten Koordinaten (i, j) sind.

**4.** Verfahren nach Anspruch 2, wobei der Differenzwertberechnungsschritt die Differenzwerte F(i, j) in Koordinaten (i, j) wie folgt berechnet.

$$F(i, j) \leftarrow [\{A(i, j) - A(i+1, j)\}^2 + \{A(i, j) - A(i, j+1)\}^2]^{1/2}$$

wobei A(i, j) ein Grauwert eines Graupixels bei (i, j) ist und A(i+1, j) und A(i, j+1) Grauwerte von Graupixeln in benachbarten Koordinaten (i, j) sind.

**5.** Verfahren nach einem der Ansprüche 1 bis 4, wobei jeder der Abstimmungsbereiche rechteckig ist.

**6.** Verfahren nach Anspruch 5, wobei jeder der Abstimmungsbereiche von einem entsprechenden Randpixel um einen vorgegebenen Abstand (H/2, W/2) entfernt ist und senkrecht zu dessen Graugradient steht.

**7.** Verfahren nach Anspruch 5 oder 6, wobei jeder der Abstimmungsbereiche eine Länge aufweist, die gleich der Breite (W) oder der Höhe (H) einer erwarteten Zeichenrahmengröße ist.

**8.** Verfahren nach einem der Ansprüche 1 bis 7, wobei der Spitzenerfassungsschritt die folgenden Schritte aufweist:

Ermitteln, ob der Abstimmungszählwert jeder der Spitzenkoordinaten größer als ein Spitzenschwellwert (TV) ist oder nicht; und
Registrieren jeder Spitzenkoordinate als Zeichenrahmenmittelpunktkandidat (CP(i, j)), wenn der Abstimmungszählwert jeder der Spitzenkoordinaten größer als der Spitzenschwellwert ist, so daß der Zeichenrahmenmittelpunktskandidat als ein Mittelpunkt der Zeichenrahmen ermittelt wird.

**9.** Verfahren nach Anspruch 8, das ferner die folgenden Schritte aufweist:

Erzeugen von Kombinationen einer vorgegebenen Anzahl registrierter Zeichenrahmenmittelpunktskandidaten;
Berechnen einer Punktzahl (SC) für jede der Kombinationen durch eine Summe der Abstimmungszählwerte der dazugehörigen registrierten Zeichenrahmenmittelpunktskandidaten; und
Feststellen, daß die registrierten Zeichenrahmenmittelpunktskandidaten einer der Kombinationen die Mittelpunkte der Zeichenrahmen sind.

**10.** Verfahren nach Anspruch 9, wobei der Punktzahlberechnungsschritt die Punktzahl jeder der Kombinationen durch Subtraktion eines Intervallgleichheitsgrads der registrierten Zeichenrahmenmittelpunktskandidaten innerhalb jeder der Kombinationen von der Summe ihrer Abstimmungszählwerte berechnet.

**11.** Verfahren nach Anspruch 8 oder 9, wobei der Punktzahlberechnungsschritt die Punktzahl jeder der Kombinationen durch Subtraktion eines Horizontalitätsgrads der registrierten Zeichenrahmenmittelpunktskandidaten innerhalb jeder der Kombinationen von der Summe ihrer Abstimmungszählwerte berechnet.

12. Verfahren nach Anspruch 9, wobei der Punktzahlberechnungsschritt die Punktzahl jeder der Kombinationen durch Subtraktion eines Intervallgleichheitsgrads und eines Horizontalitätsgrads der registrierten Zeichenrahmenmittelpunktskandidaten innerhalb jeder der Kombinationen von der Summe ihrer Abstimmungszählwerte berechnet.

13. Verfahren nach Anspruch 9, 10, 11 oder 12, wobei der Zeichenrahmenmittenbestimmungsschritt die folgenden Schritte aufweist:

Auswahl einer der Kombinationen mit der größten Punktzahl aus den Kombinationen; und
Ermitteln, ob die Punktzahl der ausgewählten Kombination größer als ein Kombinationsschwellwert (TS) ist oder nicht, so daß die registrierten Zeichenrahmenmittelpunktskandidaten der ausgewählten Kombination von Zeichenrahmenmittelpunktskandidaten als Mittelpunkte der Zeichenrahmen bestimmt werden.

14. Verfahren nach einem der Ansprüche 1 bis 13, wobei das Graupixelbild ein Postkartenbild ist.

15. Zeichenrahmenerkennungsvorrichtung, die aufweist:

eine Randpixelextraktionseinheit (801) zur Extraktion von Randpixeln an Linienrändern von Zeichenrahmen aus Graupixeln eines Graupixelbilds;
eine Abstimmungsverarbeitungseinheit (802) zur Berechnung von Graugradienten ($\theta(i, j)$) an den Randpixeln, Einstellung von Abstimmungsbereichen (1201, 1202, 1203, 1204) bezüglich der Randpixel entsprechend ihren Graugradienten und zur Durchführung von Abstimmungsprozessen durch Inkrementierung von Abstimmungszählwerten bei Koordinaten innerhalb der Abstimmungsbereiche;

wobei die Abstimmungsverarbeitungseinheit eine Einrichtung aufweist, um zu ermitteln, ob jeder der Graugradienten im wesentlichen in einem Winkel von 90°, -90°, 180° und 0° bezüglich einer Achse des Graupixelbilds ausgerichtet ist, so daß, wenn einer der Graugradienten im wesentlichen in einem Winkel von 90°, -90°, 180° und 0° bezüglich der Achse des Graupixelbilds ausgerichtet ist, der Abstimmungsbereichseinstellungsschritt einen der Abstimmungsbereiche entsprechend einem der Graugradienten einstellt;
wobei, wenn ein erster von den Graugradienten im wesentlichen in einem Winkel von 90° und -90° bezüglich der Achse des Graupixelbilds ausgerichtet ist, ein entsprechender erster Bereich von den Abstimmungsbereichen die gleiche Breite (W) wie die Breite (W) einer erwarteten Zeichenrahmengröße aufweist und von einem entsprechenden Randpixel um eine Höhe (H/2) entfernt ist, die gleich der halben Höhe (H) der erwarteten Zeichenrahmengröße in Richtung des ersten Graugradienten ist; und
wobei, wenn ein zweiter von den Graugradienten im wesentlichen in einem Winkel von 180° und 0° bezüglich der Achse des Graupixelbilds ausgerichtet ist, ein entsprechender zweiter Abstimmungsbereich die gleiche Höhe (H) wie die Höhe (H) der erwarteten Zeichenrahmengröße aufweist und von einem entsprechenden Randpixel um eine Breite (W/2) entfernt ist, die gleich der halben Breite (W) der erwarteten Zeichenrahmengröße in Richtung des zweiten Graugradienten ist;
eine Spitzenerfassungseinheit (803) zur Erfassung von Spitzenkoordinaten (PP(i, j)) mit maximalen Abstimmungszählwerten aus den Koordinaten, so daß die Spitzenkoordinaten als Mittelpunkte der Zeichenrahmen bestimmt werden.

16. Vorrichtung nach Anspruch 15, wobei die Randpixelextraktionseinheit aufweist:

eine Einrichtung zur Berechnung von Differenzwerten in den Graupixeln; und
eine Einrichtung zur Ermittlung, ob jeder der Differenzwerte größer als ein Differenzschwellwert (TF) ist oder nicht, so daß, wenn jeder der Differenzwerte größer als der Differenzschwellwert ist, ein entsprechendes Graupixel als eines der Randpixel ermittelt wird.

17. Vorrichtung nach Anspruch 16, wobei die Differenzwertberechnungseinrichtung die Differenzwerte F(i, j) in Koordinaten (i, j) wie folgt berechnet:

```
F(i, j)
← {A(i, j) - A(i+1, j)}² + {A(i, j) - A(i, j+1)}²
```

wobei A(i, j) ein Grauwert eines Graupixels bei (i, j) ist und A(i+1, j) und A(i, j+1) Grauwerte von Graupixeln in (i, j) benachbarten Koordinaten sind.

18. Vorrichtung nach Anspruch 16, wobei die Differenzwertberechnungseinrichtung die Differenzwerte F(i, j) in Koordinaten (i, j) wie folgt berechnet:

```
F(i, j)
← [{A(i, j) - A(i+1, j)}² + {A(i, j) - A(i, j+1)}²]^(1/2)
```

wobei A(i, j) ein Grauwert eines Graupixels bei (i, j) ist und A(i+1, j) und A(i, j+1) Grauwerte von Graupixeln in (i, j) benachbarten Koordinaten sind.

19. Vorrichtung nach einem der Ansprüche 15 bis 18, wobei jeder der Abstimmungsbereiche rechteckig ist.

20. Vorrichtung nach Anspruch 19, wobei jeder der Abstimmungsbereiche in einem vorgegebenen Abstand (H/2, W/2) von einem entsprechenden Randpixel angeordnet ist und senkrecht zu dessen Graugradient steht.

21. Vorrichtung nach Anspruch 19 oder 20, wobei jeder der Abstimmungsbereiche eine Länge aufweist, die gleich der Breite (W) oder der Höhe (H) einer erwarteten Zeichenrahmengröße ist.

22. Vorrichtung nach einem der Ansprüche 15 bis 21, wobei die Spitzenerfassungseinheit aufweist:

eine Einrichtung zum Ermitteln, ob der Abstimmungszählwert jeder der Spitzenkoordinaten größer als ein Spitzenschwellwert (TV) ist oder nicht; und
eine Einrichtung zum Registrieren jeder der Spitzenkoordinaten als Zeichenrahmenmittelpunktskandidat (CP (i, j)), wenn der Abstimmungszählwert jeder der Spitzenkoordinaten größer als der Spitzenschwellwert ist, so daß der Zeichenrahmenmittelpunktskandidat als ein Mittelpunkt der Zeichenrahmen bestimmt wird.

23. Vorrichtung nach Anspruch 22, die ferner aufweist:

eine zeichenrahmenkombinationserzeugungseinheit (804) zum Erzeugen von Kombinationen einer vorgegebenen Anzahl registrierter Zeichenrahmenmittelpunktskandidaten;
eine Punktzahlberechnungseinheit (805) zum Berechnen einer Punktzahl (SC) jeder der Kombinationen durch eine Summe der Abstimmungszählwerte der dazugehörigen Zeichenrahmenmittelpunktskandidaten; und
eine Zeichenrahmenbestimmungseinheit (806) zur Feststellung, daß die registrierten Zeichenrahmenmittelpunktskandidaten einer der Kombinationen Mittelpunkte der Zeichenrahmen sind.

24. Vorrichtung nach Anspruch 23, wobei die Punktzahlberechnungseinheit die Punktzahl jeder der Kombinationen durch Subtraktion eines Intervallgleichheitsgrads der registrierten Zeichenrahmenmittelpunktskandidaten innerhalb jeder der Kombinationen von der Summe ihrer Abstimmungszählwerte berechnet.

25. Vorrichtung nach Anspruch 23, wobei die Punktzahlberechnungseinheit die Punktzahl jeder der Kombinationen durch Subtraktion eines Horizontalitätsgrads der registrierten Zeichenrahmenmittelpunktskandidaten innerhalb jeder der Kombinationen von der Summe ihrer Abstimmungszählwerte berechnet.

26. Vorrichtung nach Anspruch 23, wobei die Punktzahlberechnungseinheit die Punktzahl jeder der Kombinationen durch Subtraktion eines Intervallgleichheitsgrads und eines Horizontalitätsgrads der registrierten Zeichenrahmenmittelpunktskandidaten innerhalb jeder der Kombinationen von der Summe ihrer Abstimmungszählwerte berechnet.

27. Vorrichtung nach einem der Ansprüche 23 bis 26, wobei die Zeichenrahmenmittenbestimmungseinheit aufweist:

eine Einrichtung zur Auswahl einer der Kombinationen mit einer größten Punktzahl aus den Kombinationen; und eine Einrichtung zum Ermitteln, ob die Punktzahl der ausgewählten Kombination größer als ein Kombinationsschwellwert (TS) ist oder nicht, so daß die ausgewählte Kombination der Zeichenrahmenmittelpunktskandidaten als Mittelpunkte der Zeichenrahmen bestimmt werden.

28. Vorrichtung nach einem der Ansprüche 15 bis 27, wobei das Graupixelbild ein Postkartenbild ist.

**Revendications**

1. Procédé de détection de cadres de caractères comprenant les étapes consistant à :

extraire des pixels de contour au niveau des bords de lignes de cadres de caractères à partir de pixels gris d'une image en pixels gris ;
calculer des déclinaisons de gris (θ, (i, j)) au niveau desdits pixels de contour ;
configurer des régions de vote (1201, 1202, 1203, 1204) par rapport auxdits pixels de contour selon lesdites déclinaisons de gris de ceux-ci ;
déterminer si chacune desdites déclinaisons de gris est sensiblement une valeur parmi les valeurs de 90°, -90°, 180° et 0° par rapport à un axe de ladite image en pixels de gris,
de sorte que quand une desdites déclinaisons de gris est sensiblement une valeur parmi les valeurs de 90°, -90°, 180° et 0° par rapport à l'axe de ladite image en pixels de gris, ladite étape de configuration de région de vote configure une desdites régions de vote selon ladite une desdites déclinaisons de gris ;

dans lequel, quand une première déclinaison desdites déclinaisons de gris est sensiblement une valeur parmi les valeurs de 90°, -90° par rapport à l'axe de ladite image en pixels de gris, une première région de vote correspondante desdites régions de vote a une largeur (W) identique à la largeur (W) d'une taille de cadre de caractère escomptée et est distante d'un pixel correspondant desdits pixels de contour selon une hauteur (H/2) égale à la moitié de la hauteur (H) de ladite taille de cadre de caractère escomptée le long de ladite première déclinaison desdites déclinaisons de gris ; et

dans lequel, quand une seconde déclinaison desdites déclinaisons de gris est sensiblement une valeur parmi les valeurs de 180° et 0° par rapport à l'axe de ladite image en pixels de gris, une seconde région de vote correspondante desdites régions de vote a une hauteur (H) identique à la hauteur (H) d'une taille de cadre de caractère escomptée et est distante d'un pixel correspondant desdits pixels de contour selon une largeur (W/2) égale à la moitié de la largeur (W) de ladite taille de cadre de caractère escomptée le long de ladite seconde déclinaison desdites déclinaisons de gris ;
exécuter des processus de vote en incrémentant des comptes de vote au niveau de coordonnées dans lesdites régions de vote ; et
détecter des coordonnées de crête (PP (i, j)) ayant des comptes de vote de crête à partir desdites coordonnées, de sorte que lesdites coordonnées de crête soient déterminées de façon à constituer les centres desdits cadres de caractères.

2. Procédé selon la revendication 1, dans lequel ladite étape d'extraction de pixels de contour comprend les étapes consistant à :

calculer des valeurs différentielles au niveau desdits pixels de gris ; et
déterminer si chacune des valeurs différentielles est supérieure à une valeur de seuil de valeur différentielle (TF) ou non, de sorte que, quand chacune desdites valeurs différentielles est supérieure à ladite valeur de seuil de valeur différentielle, un pixel correspondant desdits pixels de gris soit déterminé comme étant un desdits pixels de contour.

3. Procédé selon la revendication 2, dans lequel ladite étape de calcul de valeur différentielle calcule lesdites valeurs différentielles F(i, j) aux coordonnées (i, j) par

$$F(i, j) \leftarrow \{A(i, j) - A(i + 1, j)\}^2 + \{A(i, j) - A(i, j + 1)\}^2$$

où A(i, j) est une valeur de gris d'un pixel de gris au niveau de (i, j) et A(i+1, j) et A(i, j+1) sont des valeurs de gris de pixels de gris au niveau de coordonnées adjacentes à (i, j).

4. Procédé selon la revendication 2, dans lequel ladite étape de calcul de valeur différentielle calcule lesdites valeurs différentielles F(i, j) aux coordonnées (i, j) par

$$F(i, j) \leftarrow [\{A(i, j) - A(i + 1, j)\}^2 + \{A(i, j) - A(i, j + 1)\}^2]^{1/2}$$

où A(i, j) est une valeur de gris d'un pixel de gris au niveau de (i, j) et A(i+1, j) et A(i, j+1) sont des valeurs de gris de pixels de gris au niveau de coordonnées adjacentes à (i, j).

5. Procédé selon l'une quelconque des revendications 1 à 4, dans lequel chacune des régions de vote est rectangulaire.

6. Procédé selon la revendication 5, dans lequel chacune des régions de vote est distante d'un pixel correspondant desdits pixels de contour selon une distance prédéterminée (H/2, W/2) et perpendiculaire à sa déclinaison de gris.

7. Procédé selon la revendication 5 ou 6, dans lequel chacune desdites régions de vote a une longueur de la largeur (W) ou de la hauteur (H) d'une taille de cadre de caractère escomptée.

8. Procédé selon l'une quelconque des revendications 1 à 7, dans lequel ladite étape de détection de crête comprend les étapes consistant à :

déterminer si le compte de vote de chacune desdites coordonnées de crête est supérieur à une valeur de seuil de crête (TV) ou non ; et
enregistrer chacune desdites coordonnées de crête comme candidat de centre de cadre de caractère (CP(i, j)) quand le compte de vote de chacune desdites coordonnées de crête est supérieur à ladite valeur de seuil de crête, de sorte que ledit candidat de centre de cadre de caractère soit déterminé comme étant un centre desdits cadres de caractères.

9. Procédé selon la revendication 8, comprenant en outre les étapes consistant à :

générer des combinaisons d'un certain nombre prédéterminé de candidats de centre de cadre de caractère enregistrés ;
calculer un score (SC) de chacune desdites combinaisons par une somme des comptes de vote desdits candidats de centre de cadre de caractère enregistrés lui appartenant ; et
déterminer que les candidats de centre de cadre de caractère enregistrés d'une desdites combinaisons sont lesdits centres desdits cadres de caractères.

10. Procédé selon la revendication 9, dans lequel ladite étape de calcul de score calcule le score de chacune desdites combinaisons en soustrayant un degré à intervalle équidistant desdits candidats de centre de cadre de caractère enregistrés dans chacune desdites combinaisons de leur somme des comptes de vote.

11. Procédé selon la revendication 8 ou 9, dans lequel ladite étape de calcul de score calcule le score de chacune desdites combinaisons en soustrayant un degré d'horizontalité desdits candidats de centre de cadre de caractère enregistrés dans chacune desdites combinaisons de leur somme des comptes de vote.

**12.** Procédé selon la revendication 9, dans lequel ladite étape de calcul de score calcule le score de chacune desdites combinaisons en soustrayant un degré à intervalle équidistant et un degré d'horizontalité desdits candidats de centre de cadre de caractère enregistrés dans chacune desdites combinaisons de leur somme des comptes de vote.

**13.** Procédé selon la revendication 9, 10, 11 ou 12, dans lequel ladite étape de détermination de centre de cadre de caractère comprend les étapes consistant à :

sélectionner une desdites combinaisons ayant un plus grand score parmi lesdites combinaisons ; et
déterminer si le score de ladite combinaison sélectionnée est supérieur à une valeur de seuil de combinaison (TS) ou non, de sorte que les candidats de centre de cadre de caractère enregistrés de ladite combinaison sélectionnée desdits candidats de centre de cadre de caractère soient déterminés pour être lesdits centres desdits cadres de caractères.

**14.** Procédé selon l'une quelconque des revendications 1 à 13, dans lequel ladite image en pixels de gris est une image de carte postale.

**15.** Dispositif de détection de cadres de caractères comprenant :

une unité d'extraction de pixels de contour (801) pour extraire des pixels de contour au niveau des bords de ligne de cadres de caractères à partir des pixels gris d'une image de pixel gris ;
une unité de traitement de vote (802) pour calculer des déclinaisons de gris ($\theta$, (i, j)) au niveau desdits pixels de contour, configurer des régions de vote (1201, 1202, 1203, 1204) par rapport auxdits pixels de contour selon lesdites déclinaisons de gris de ceux-ci, et exécuter des processus de vote en incrémentant des comptes de vote à des coordonnées dans lesdites régions de vote ;

dans lequel ladite unité de traitement de vote comprend des moyens pour déterminer si chacune desdites déclinaisons de gris est sensiblement une valeur parmi les valeurs de 90°, -90°, 180° et 0° par rapport à l'axe de ladite image en pixels de gris,de sorte que quand une desdites déclinaisons de gris est sensiblement une valeur parmi les valeurs de 90°, -90°, 180° et 0° par rapport à un axe de ladite image en pixels de gris, ladite étape de configuration de région de vote configure une desdites régions de vote selon ladite une desdites déclinaisons de gris ;
dans lequel, quand une première déclinaison desdites déclinaisons de gris est sensiblement une valeur parmi les valeurs de 90°, -90° par rapport à l'axe de ladite image en pixels de gris, une première région de vote correspondante desdites régions de vote a une largeur (W) identique à la largeur (W) d'une taille de cadre de caractère escomptée et est distante d'un pixel correspondant desdits pixels de contour selon une hauteur (H/2) égale à la moitié de la hauteur (H) de ladite taille de cadre de caractère escomptée le long de ladite première déclinaison desdites déclinaisons de gris ; et
dans lequel, quand une seconde déclinaison desdites déclinaisons de gris est sensiblement une valeur parmi les valeurs de 180° et 0° par rapport à l'axe de ladite image en pixels de gris, une seconde région de vote correspondante desdites régions de vote a une hauteur (H) identique à la hauteur (H) d'une taille de cadre de caractère escomptée et est distante d'un pixel correspondant desdits pixels de contour selon une largeur (W/2) égale à la moitié de la largeur (W) de ladite taille de cadre de caractère escomptée le long de ladite seconde déclinaison desdites déclinaisons de gris ;
une unité de détection de crête (803) pour détecter des coordonnées de crête (PP (i, j)) ayant des comptes de vote de crête à partir desdites coordonnées, de sorte que lesdites coordonnées de crête soient déterminées pour être les centres desdits cadres de caractères.

**16.** Dispositif selon la revendication 15, dans lequel ladite unité d'extraction de pixel de contour comprend :

des moyens pour calculer des valeurs différentielles au niveau desdits pixels de gris ; et
des moyens pour déterminer si chacune desdites valeurs différentielles est supérieure à une valeur de seuil de valeur différentielle (TF) ou non, de sorte que quand chacune desdites valeurs différentielles est supérieure à ladite valeur de seuil de valeur différentielle, un pixel correspondant desdits pixels de gris est déterminé pour être un desdits pixels de contour.

**17.** Dispositif selon la revendication 16, dans lequel lesdits moyens de calcul de valeur différentielle calculent lesdites valeurs différentielles F(i, j) aux coordonnées (i, j) par

$$F(i, j) \leftarrow \{A(i, j) - A(i + 1, j)\}^2 + \{A(i, j) - A(i, j + 1)\}^2$$

où A(i, j) est une valeur de gris d'un pixel de gris au niveau de (i, j) et A(i+1, j) et A(i, j+1) sont des valeurs de gris de pixels de gris au niveau de coordonnées adjacentes à (i, j).

18. Dispositif selon la revendication 16, dans lequel lesdits moyens de calcul de valeur différentielle calculent lesdites valeurs différentielles F(i, j) aux coordonnées (i, j) par

$$F(i, j) \leftarrow [\{A(i, j) - A(i + 1, j)\}^2 + \{A(i, j) - A(i, j + 1)\}^2]^{1/2}$$

où A(i, j) est une valeur de gris d'un pixel de gris au niveau de (i, j) et A(i+1, j) et A(i, j+1) sont des valeurs de gris de pixels de gris au niveau de coordonnées adjacentes à (i, j).

19. Dispositif selon l'une quelconque des revendications 15 à 18, dans lequel chacune desdites régions de vote est rectangulaire.

20. Dispositif selon la revendication 19, dans lequel chacune desdites régions de vote est distante d'un pixel correspondant desdits pixels de contour selon une distance prédéterminée (H/2, W/2) et perpendiculaire à sa déclinaison de gris.

21. Dispositif selon la revendication 19 ou 20,
dans lequel chacune desdites régions de vote a une longueur de la largeur (W) ou de la hauteur (H) d'une taille de cadre de caractère escomptée.

22. Dispositif selon l'une quelconque des revendications 15 à 21, dans lequel ladite unité de détection de crête comprend :

des moyens pour déterminer si le compte de vote de chacune desdites coordonnées de crête est supérieur à une valeur de seuil de crête (TV) ; et
des moyens pour enregistrer ladite chaque coordonnée desdites coordonnées de crête comme candidat de centre de cadre de caractère (CP(i, j)) quand le compte de vote de chacune desdites coordonnées de crête est supérieur à ladite valeur de seuil de crête, de sorte que lesdits candidats de centre de cadre de caractère soient déterminés pour constituer le centre desdits cadres de caractères.

23. Dispositif selon la revendication 22, comprenant en outre :

une unité de génération de combinaison de cadres de caractères (804) pour générer des combinaisons d'un certain nombre prédéterminé de candidats de centre de cadre de caractère enregistrés ;
une unité de calcul de score (805) pour calculer un score (SC) de chacune desdites combinaisons par une somme des comptes de vote desdits candidats de centre de cadre de caractère enregistrés lui appartenant ; et
une unité de détermination de cadres de caractères (806) pour déterminer que les candidats de centre de cadre de caractère enregistrés d'une desdites combinaisons constituent lesdits centres desdits cadres de caractères.

24. Dispositif selon la revendication 23, dans lequel ladite unité de calcul de score calcule le score de chacune desdites combinaisons en soustrayant un degré à intervalle équidistant desdits candidats de centre de cadre de caractère enregistrés dans chacune desdites combinaisons de leur somme des comptes de vote.

**25.** Dispositif selon la revendication 23, dans lequel ladite étape de calcul de score calcule le score de chacune desdites combinaisons en soustrayant un degré d'horizontalité desdits candidats de centre de cadre de caractère enregistrés dans chacune desdites combinaisons de leur somme des comptes de vote.

**26.** Dispositif selon la revendication 23, dans lequel ladite étape de calcul de score calcule le score de chacune desdites combinaisons en soustrayant un degré à intervalle équidistant et un degré d'horizontalité desdits candidats de centre de cadre de caractère enregistrés dans chacune desdites combinaisons de leur somme des comptes de vote.

**27.** Dispositif selon l'une quelconque des revendications 23 à 26, dans lequel ladite unité de détermination de centre de cadres de caractères comprend :

des moyens pour sélectionner une desdites combinaisons ayant un plus grand score parmi lesdites combinaisons ; et
des moyens pour déterminer si le score de ladite combinaison sélectionnée est supérieur à une valeur de seuil de combinaison (TS) ou non, de sorte que ladite combinaison sélectionnée desdits candidats de centre de cadre de caractère soit déterminée pour être lesdits centres desdits cadres de caractères.

**28.** Dispositif selon l'une quelconque des revendications 15 à 27, dans lequel ladite image en pixels gris est une image de carte postale.

## *Fig. 1*

```
┌─────────────────────────┐
│        LABELING         │ ── 101
│     PROCESSING UNIT      │
└─────────────────────────┘
             │
┌─────────────────────────┐
│          LABEL          │ ── 102
│     DETERMINING UNIT     │
└─────────────────────────┘
             │
┌─────────────────────────┐
│       LABEL SIZE        │ ── 103
│     DETECTING UNIT       │
└─────────────────────────┘
             │
┌─────────────────────────┐
│    PRESCRIBED LABEL     │ ── 104
│     EXTRACTING UNIT      │
└─────────────────────────┘
             │
┌─────────────────────────┐
│   NON-PRESCRIBED LABEL  │ ── 105
│   HYPHEN DETECTING UNIT  │
└─────────────────────────┘
             │
┌─────────────────────────┐
│    PRESCRIBED LABEL     │ ── 106
│     EXTRACTING UNIT      │
└─────────────────────────┘
             │
┌─────────────────────────┐
│          LABEL          │ ── 107
│     DETERMINING UNIT     │
└─────────────────────────┘
```

Fig. 2

## Fig. 3A

## Fig. 3B

LA1
NON-PRESCRIBED

LA2   LA3   LA4
PRESCRIBED

## Fig. 3C

W1

| 2 | 1 | 0 |—| 0 | 0 | 0 | 0 |

H1

LA1      LA2   LA3   LA4

## Fig. 3D

W1

| 2 | 1 | 0 |—| 0 | 0 | 0 | 0 |

H1

LA1      LA5   LA2   LA3   LA4

## Fig. 3E

W1

| 2 | 1 | 0 | | 0 | 0 | 0 | 0 |

H1

LA1          LA5   LA2   LA3   LA4

## Fig. 3F

W1

| 2 | 1 | 0 | | 0 | 0 | 0 | 0 |

H1

LA6   LA7   LA8      LA5   LA2   LA3   LA4

## Fig. 4

# Fig. 5A

# Fig. 5B

## Fig. 5C

## Fig. 5D

EP 1 237 116 B1

## Fig. 5E

## Fig. 5F

29

# Fig. 6

## Fig. 7

## Fig. 8

```
┌─────────────────────────┐
│      IMAGE SCANNER      │ ─── 800
└─────────────────────────┘
            │
            ▼
┌─ ─ ─ ─ ─ ─ ─ ─ ─ ─ ─ ─ ─ ─ ─ ─┐
│  ┌───────────────────────┐      │
│  │      EDGE PIXEL       │ ─ 801│
│  │   EXTRACTING UNIT     │      │
│  └───────────────────────┘      │
│            │                    │
│            ▼                    │
│  ┌───────────────────────┐      │
│  │       VOTING          │ ─ 802│
│  │  PROCESSING UNIT      │      │
│  └───────────────────────┘      │
│            │                    │
│            ▼                    │
│  ┌───────────────────────┐      │
│  │        PEAK           │ ─ 803│
│  │  DETECTING UNIT       │      │
│  └───────────────────────┘      │
│            │                    │
│            ▼                    │
│  ┌───────────────────────┐      │
│  │  CHARACTER FRAME      │ ─ 804│
│  │   COMBINATION         │      │
│  │  GENERATING UNIT      │      │
│  └───────────────────────┘      │
│            │                    │
│            ▼                    │
│  ┌───────────────────────┐      │
│  │       SCORE           │ ─ 805│
│  │  CALCULATING UNIT     │      │
│  └───────────────────────┘      │
│            │                    │
│            ▼                    │
│  ┌───────────────────────┐      │
│  │  CHARACTER FRAME      │ ─ 806│
│  │  DETERMINING  UNIT    │      │
│  └───────────────────────┘      │
└─ ─ ─ ─ ─ ─ ─ ─ ─ ─ ─ ─ ─ ─ ─ ─┘
            │
            ▼
  CHARACTER FRAME CENTERS
```

## *Fig. 9A*

| Fig. 9 |
| --- |
| Fig. 9A |
| Fig. 9B |

CHARACTER FRAME
DETECTING ROUTINE

FETCH
IMAGE DATA — 901

INITIALIZATION — 902

CALCULATE DIFFERENTIAL
VALUE F(i, j) — 903

904
F(i, j) > TF
?
NO

YES

CALCULATE
GRADIENT θ(i, j) — 905

906
θ(i, j) ≒ −π/2
?
YES → UPWARD VOTING PROCESS — 907

NO 908
θ(i, j) ≒ π/2
?
YES → DOWNWARD VOTING PROCESS — 909

NO 910
θ(i, j) ≒ π
?
YES → LEFTWARD VOTING PROCESS — 911

NO 912
θ(i, j) ≒ 0
?
YES → RIGHTWARD VOTING PROCESS — 913

NO

i ← i+1 — 914

915
i ≧ iMAX
?
NO

YES

33

## Fig. 9B

```
                    ┌─────────────────┐
                    │   j ← j+1       │────── 916
                    └─────────────────┘
                              │        ──── 917
         NO           ╱───────────────╲
    ┌────────────────<   j ≧ jMAX       >
    │                 ╲      ?        ╱
    │                  ╲─────────────╱
    │                        │ YES
    │                ┌─────────────────────────┐
    │                │ DETECT PEAK POINTS PP(i, j)│──── 918
    │                └─────────────────────────┘
    │         ┌──────────────│──── 919
    │         │        ╱──────────────╲        NO
    │         │       <  V(i,j)atPP(i,j) > TV  >─────┐
    │         │        ╲       ?       ╱            │
    │         │         ╲─────────────╱             │
    │         │               │ YES                 │
    │         │       ┌─────────────────┐           │
    │         │       │ CP(i, j) ← PP(i, j)│──── 920 │
    │         │       └─────────────────┘           │
    │         │               │←──────────────────── │
    │   YES   │        ╱──────────────╲──── 921
    │  ┌──────────────<   OTHER PP(i,j) >
    │  │       │       ╲      ?       ╱
    │  │       └────── ╲─────────────╱
    │  │                     │ NO    ──── 922
    │  │             ╱──────────────╲        YES
    │  │            <   NUMBER OF     >──────────────┐
    │  │            ╲    CP < 7 ?    ╱               │
    │  │             ╲──────────────╱                │
    │  │                   │ NO                      │
    │  │          ┌─────────────────────┐            │
    │  │          │   SELECT & SORT     │──── 923    │
    │  │          │ CONBINATIONS OF CP(i, j)│        │
    │  │          └─────────────────────┘            │
    │  │          ┌─────────────────────┐            │
    │  │          │ CALCULATE SCORE SC FOR│──── 924  │
    │  │          │  SORTED COMBINATIONS │           │
    │  │          └─────────────────────┘            │
    │  │          ┌─────────────────────┐            │
    │  │          │ SELECT ONE CONBINATION│──── 925  │
    │  │          └─────────────────────┘            │
    │  │                   │        ──── 926         │
    │  │           ╱──────────────╲       NO         │
    │  │          <    SC > TS      >───────────────→│
    │  │          ╲       ?       ╱                  │
    │  │           ╲──────────────╱                  │
    │  │                 │ YES                        │
    │  │          ┌─────────────────┐                │
    │  │          │   DETERMINE     │──── 927        │
    │  │          │ CHARACTER FRAMES │               │
    │  │          └─────────────────┘                │
    │  │                 │←──────────────────────────┘
    │  │            ╭─────────────╮
    │  │            │    END      │──── 928
    │  │            ╰─────────────╯
```

*Fig. 10A*

*Fig. 10B*

*Fig. 10B*

Fig. 10D

Fig. 10E

Fig. 10F

## Fig. 11

## Fig. 12A

$(i-W/2, j-(H+d)/2)$

$W$ — 1201

$d$

$(i+W/2, j-(H-d)/2)$

$H/2$

$\theta(i, j) = -\pi/2$

$(i, j)$

## Fig. 12B

$(i, j)$ — $\theta(i, j) = \pi/2$

$H/2$

1202

$d$

$(i-W/2, j+(H-d)/2)$

$W$

$(i+W/2, j+(N+d)/2)$

## Fig. 12C

$(i-(W+d)/2, j-H/2)$

— $W/2$ —

1203

$\theta(i, j) = \pi$

$H$

$(i, j)$

$d$

$(i-(W-d)/2, j+H/2)$

## Fig. 12D

$(i+(W+d)/2, j-H/2)$

— $W/2$ —

1204

$\theta(i, j) = \pi$

$(i, j)$

$H$

$d$

$(i+(W+d)/2, j+H/2)$

*Fig. 13A*

*Fig. 13B*

1302

1301

*Fig. 13C*

## Fig. 14